# EUROPEAN PATENT APPLICATION

(11) **EP 4 707 363 A1**
(43) Date of publication of application: **11.03.2026**
(21) Application number: 25195597.7
(22) Date of filing: 13.08.2025
(51) Int. Cl.: C10M 171/00

(54) **REFRIGERATION OIL AND HEAT PUMP INCLUDING THE SAME**

(30) Priority: 29.08.2024 KR 20240117074
(71) Applicant: SK Innovation Co., Ltd., Seoul 03188 (KR); SK Enmove Co., Ltd., Seoul 03188 (KR)
(72) Inventor: KIM, Hye Ri, 34124 Daejeon (KR); KIM, Myoung Lae, 34124 Daejeon (KR); LEE, Ok Suk, 34124 Daejeon (KR); JIN, Seong Ho, 34124 Daejeon (KR); CHOI, Geun Ho, 34124 Daejeon (KR)
(74) Representative: Prüfer & Partner mbB Patentanwälte · Rechtsanwälte

(57) **Abstract**

A refrigeration oil according to exemplary embodiments of the present disclosure includes a silane compound having at least one of a glycidyl group and an isocyanate group. The heat pump according to exemplary embodiments of the present disclosure includes a refrigerant including trifluoroiodomethane (R-13I1) and the refrigeration oil.

## Description

### [BACKGROUND OF THE INVENTION]

### 1. Field of the Invention

The present disclosure relates to a refrigeration oil composition, a refrigerant composition, and a heat pump including the same, and cooling method, heating method with the same and use of the refrigeration oil composition.

### 2. Description of the Related Art

Recently, various types of heat pumps used indoors and outdoors have been developed, and due to the development of electric vehicles, etc., miniaturized heat pumps are increasingly in demand. The heat pump is provided with a refrigerant circulation system including a compressor, a condenser, an expansion mechanism device such as expansion valves, an evaporator and the other necessary parts. In the refrigerant circulation system, the phenomenon in which heat is absorbed from the surroundings during the vaporization of a liquid is utilized, and a cycle is repeated, including compression and temperature increase of the vaporized refrigerant in the compressor, condensation and heat release in the condenser resulting in liquefaction of the refrigerant, pressure reduction and expansion in the expansion mechanism device, and vaporization of the refrigerant in the evaporator.

In addition to the refrigerant, the refrigerant circulation system is filled with a refrigeration oil for lubricating sliding parts of the compressor. The refrigeration oil is designed to achieve the desired performance when filled in the refrigerant circulation system, and in this case, considering compatibility with the refrigerant becomes important. For example, a refrigeration oil with poor compatibility with the refrigerant may not return to the sliding parts of the compressor during circulation in the refrigerant circulation system due to incompatibility with the refrigerant, and there is a concern that this may result in a reduction in lubricity.

In order to better meet these performance requirements, in the case of hydrofluorocarbon (HFC) refrigerants, refrigeration lubricants mainly composed of oxygen-containing organic compounds such as a vinyl ether compound and polyoxyalkylene glycol are generally used. In order to further improve the stability and lubrication performance of the refrigeration lubricants, various additives are commonly added to the refrigeration lubricants mainly composed of oxygen-containing organic compounds.

### [Prior Art Document]

### [Patent Document]

Korean Patent Laid-Open Publication No. 2010-0017092

### [SUMMARY OF THE INVENTION]

An object of the present disclosure is to provide a refrigeration oil with enhanced chemical stability at high temperatures and/or high pressures.

Another object of the present disclosure is to provide a heat pump including the refrigeration oil with enhanced chemical stability at high temperatures and/or high pressures.

A refrigeration oil composition according to exemplary embodiments of the present disclosure includes a silane compound having at least one of a glycidyl group and an isocyanate group.

In exemplary embodiments, the silane compound having a glycidyl group may include a silane compound represented by Formula 1 below.

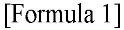

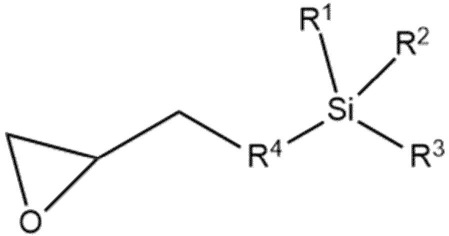

In Formula 1, R¹ to R³ may each independently be an organic group having 1 to 10 carbon atoms, and R⁴ may be an organic group having 1 to 10 carbon atoms.

In exemplary embodiments, R¹ to R³ may each independently be an alkyl group or an alkoxy group having 1 to 10 carbon atoms and/or wherein R4 may include at least one heteroatom.

In exemplary embodiments, the silane compound having an isocyanate group may include a silane compound represented by Formula 2 below.

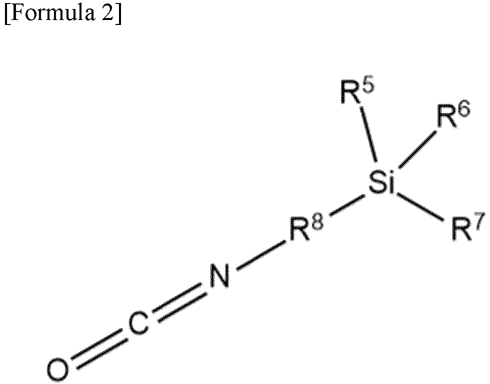

In Formula 2, R⁵ to R⁷ may each independently be an organic group having 1 to 10 carbon atoms, and R⁸ may be an alkylene group having 1 to 10 carbon atoms.

In exemplary embodiments, R⁵ to R⁷ may each independently be an alkyl group or an alkoxy group having 1 to 10 carbon atoms.

In exemplary embodiments, the silane compound may be included in an amount of 5% or less by weight of the refrigeration oil composition.

In exemplary embodiments, the refrigeration oil composition may further include a stabilizer including a phosphate compound, and preferably the stabilizer may be included in an amount of 0.5 to 3 % by weight of the refrigeration oil composition.

In exemplary embodiments, the stabilizer may include a phosphate compound, preferably the phosphate compound may comprise at least one of trimethylphosphate, triethylphosphate, tributylphosphate, tris(methylphenyl)phosphate, and triphenylphosphate.

In exemplary embodiments, the refrigeration oil composition may further include a lubricant.

In exemplary embodiments, the lubricant may be included in an amount of 70 to 99 % by weight of the refrigeration oil composition.

In exemplary embodiments, the lubricant may include a polyol ester and/or alkylated naphthalene.

In exemplary embodiments, the refrigeration oil composition may further comprise at least one substance selected from the group consisting of an antioxidant, a defoaming agent, a load-bearing additive, a chlorine scavenger, a detergent-dispersant, a viscosity index improver, an oiliness agent, a rust inhibitor, a pour point depressant, and an extreme pressure additive.

### A refrigerant composition

In exemplary embodiments, comprises trifluoroiodomethane (R-13I1) and the refrigeration oil composition.

A refrigerant composition according to exemplary embodiments of the present disclosure includes a refrigerant including trifluoroiodomethane (R-13I1) and the refrigeration oil composition.

A heat pump according to exemplary embodiments of the present disclosure is operated with the refrigerant composition.

A method for cooling by the heat pump according to exemplary embodiments of the present disclosure comprises: the refrigerant composition is compressed through a compressor, is bypassed to an internal condenser and an expansion valve for heating, releases heat in an external condenser, expands through an expansion valve for cooling, and reabsorbs heat through an evaporator.

A method for heating by the heat pump according to exemplary embodiments of the present disclosure comprises: the refrigerant composition is compressed through the compressor, releases heat in an internal condenser, expands through an expansion valve for heating, absorbs heat from an external condenser, and absorbs heat through a cooler.

Use of the refrigeration oil composition according to exemplary embodiments of the present disclosure is for removing acid and/or water formed in the refrigerant composition, for improving chemical stability in the high temperature and/or high pressure, and/or for preventing iodine contained in R-13I1 from attaching to metal surfaces.

The refrigeration oil composition according to exemplary embodiments of the present disclosure may exhibit enhanced chemical stability at high temperatures and/or high pressures.

The heat pump according to exemplary embodiments of the present disclosure may include the refrigeration oil composition exhibiting enhanced chemical stability at high temperatures and/or high pressures.

The refrigeration oil composition of the present disclosure may be used in eco-friendly heat pumps, etc., that use a refrigerant including trifluoroiodomethane (R-13I1) to prevent climate change by suppressing air pollution and greenhouse gas emissions.

### [BRIEF DESCRIPTION OF THE DRAWINGS]

The above and other objects, features and other advantages of the present disclosure will be more clearly understood from the following detailed description taken in conjunction with the accompanying drawings, in which:

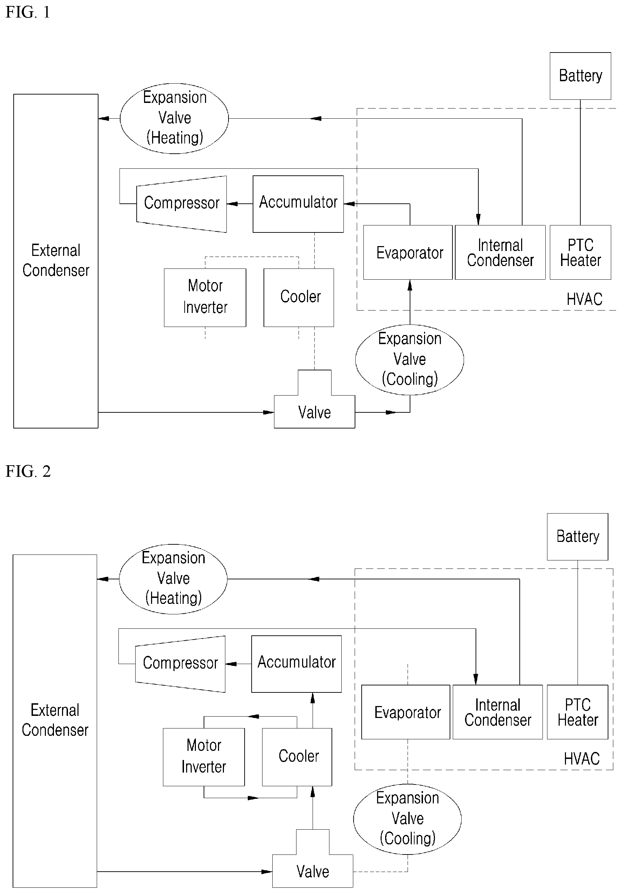

FIGS. 1 and 2 are schematic views illustrating the flow of a refrigerant for heat exchange in a cooling mode or a heating mode of a heat exchanger according to one embodiment, respectively; and

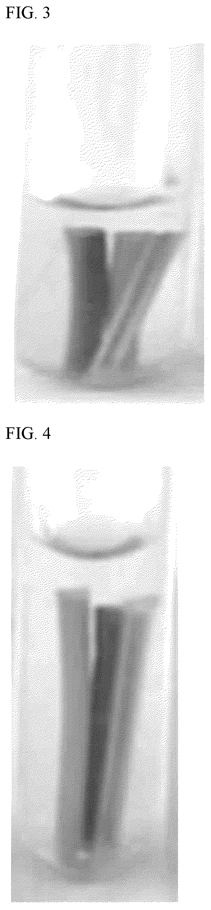

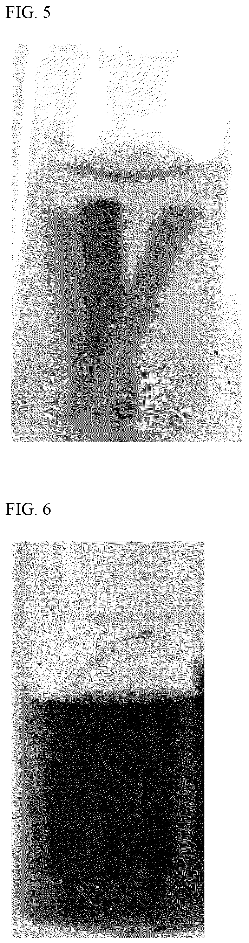

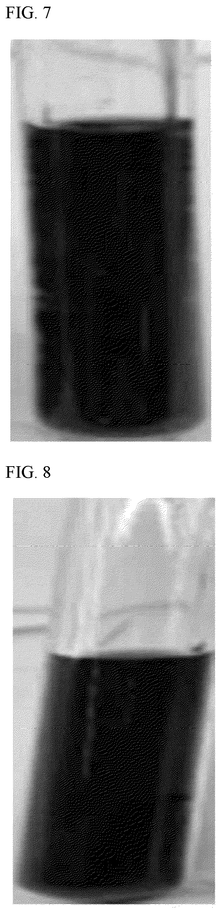

FIGS. 3 to 8 are photographs showing refrigeration oil compositions of Examples 1, 2 and 4, and Comparative Examples 1 to 3, respectively, after ASHRAE 97 evaluation was performed in the experimental example. ASHRAE 97 evaluation is a sealed glass-tube method to test the chemical stability of materials for use within refrigerant systems, especially under elevated temperature conditions, which was published by (ASHRAE; American Society of Heating, Refrigerating and Air-Conditioning Engineers).

### [DETAILED DESCRIPTION OF THE INVENTION]

According to the embodiments of the present disclosure, a refrigeration oil or refrigeration oil composition including a silane compound is provided.

As the refrigeration oil or refrigeration oil composition includes a silane compound, the chemical stability of a refrigerant including trifluoroiodomethane (R-13I1) at high temperatures and/or high pressures may be enhanced.

Hereinafter, embodiments of the present disclosure will be described in detail. However, these are merely illustrative and the present disclosure is not limited to the specific embodiments described by way of example.

The term "refrigeration oil" or "refrigeration oil composition" as used herein may refer to an oil or oil composition which adopts an oily or lipophilic phase. The refrigeration oil or refrigeration oil composition may include, besides the silane compound, an oil component, such as a lubricant or other materials disclosed herein.

The term "organic group" as used herein may refer to a substituent that includes only carbon and hydrogen, or that includes carbon and hydrogen along with one or more heteroatoms.

The term "heteroatom" as used herein may refer to an atom other than carbon and/or hydrogen. For example, the heteroatom may be nitrogen (N), oxygen (O), phosphorus (P), sulfur (S), etc.

The term "substituted" as used herein may refer to a state in which at least one of hydrogen atoms in a compound is substituted with a substituent, such as a halogen group, a hydroxyl group, a heteroalkyl group, a heterocycloalkyl group, a heteroaryl group, an amine group, a nitrile group, a nitro group, a silyl group, etc.

The term "unsubstituted" as used herein may refer to a state in which all hydrogen atoms of a compound are not substituted, i.e., remain unsubstituted.

The term "alkyl group" as used herein may refer to a straight or branched alkyl group having 1 to 10 carbon atoms, unless otherwise defined in the relevant section.

The term "cycloalkyl group" as used herein may refer to a functional group derived by removing one hydrogen atom from a cycloalkane having 1 to 10 carbon atoms, unless otherwise defined in the relevant section.

The term "aryl group" as used herein may refer to a functional group derived by removing one hydrogen atom from an aromatic hydrocarbon having 6 to 10 carbon atoms, unless otherwise defined in the relevant section.

The term "alkylene group" as used herein may refer to a functional group derived by removing two hydrogen atoms from a straight or branched alkyl group having 1 to 10 carbon atoms, unless otherwise defined in the relevant section.

The refrigeration oil composition according to exemplary embodiments of the present disclosure includes a silane compound having at least one of a glycidyl group and an isocyanate group, wherein a silane compound in the present disclosure has a group or structural moiety which may serve as an acid scavenger. The acid may be formed by reacting the refrigerant with the water during operating of the heat pump. Further, the silane compound may additionally function as a moisture scavenger.

The refrigeration oil composition may be used together with a refrigerant in a heat exchange system (e.g., a heat pump). In such a case, the silane compound may function to remove acid generated due to decomposition of the refrigerant during operation of the heat exchange system. By including the silane compound, the refrigeration oil composition may exhibit enhanced chemical stability at elevated temperature in a closed system, i.e. at high temperatures and/or high pressures, wherein the capability to absorb acid is investigated by ASHRAE 97, wherein the high temperature means up to 175 °C, and wherein the high pressure is elevated pressure in a closed system comprising the refrigerant oil composition by increasing temperature by 175 °C.

In the present disclosure, since the silane compound includes a glycidyl group as a functional group, the acid and moisture scavenging abilities of the refrigeration oil composition may be further enhanced.

In the present disclosure, since the silane compound includes an isocyanate group as a functional group, the acid and moisture scavenging abilities of the refrigeration oil composition may be further enhanced.

In exemplary embodiments, the refrigeration oil composition may be used together with a refrigerant including trifluoroiodomethane (R-13I1) as a refrigerant composition. Trifluoroiodomethane (R-13I1) is a type of hydrofluorocarbon (HFC) refrigerant, and has an ozone depletion potential (ODP) of 0 and a global warming potential (GWP) of less than 5. Accordingly, the environmental friendliness may be enhanced due to the trifluoroiodomethane (R-13I1) included in the refrigerant.

Trifluoroiodomethane (R-13I1) may react with moisture due to its reactivity to generate acid. Accordingly, discoloration of the refrigeration oil, formation of sludge, and corrosion of metal, e.g. corrosive material comprising Al, Cu and/or Fe may occur due to oxidation of the refrigerant or the refrigeration oil itself. In addition, the generation of acid may accelerate the decomposition of trifluoroiodomethane (R-13I1). In the present disclosure, the refrigeration oil composition of the examples includes a silane compound as an acid scavenger, thereby removing the acid generated by decomposition of the refrigerant.

In exemplary embodiments, the silane compound may be included in an amount of 5% by weight ("wt%") or less, or 0.1 wt% to 5 wt%, or 1 wt% to 5 wt%, or 1 wt% to 3 wt%, or 1 wt% to 2 wt% based on the total weight of the refrigeration oil composition. When the silane compound is included in an amount of 5 wt% or less based on the total weight of the refrigeration oil composition, a decrease in the lubricating performance of the refrigeration oil composition may be prevented. In addition, the chemical stability of the refrigeration oil composition including trifluoroiodomethane (R-13I1), which is a refrigerant, may be further enhanced, for example, by preventing iodine contained in the trifluoroiodomethane (R-13I1) from attaching to metal surfaces.

In exemplary embodiments, the silane compound having a glycidyl group may include a silane compound represented by Formula 1 below.

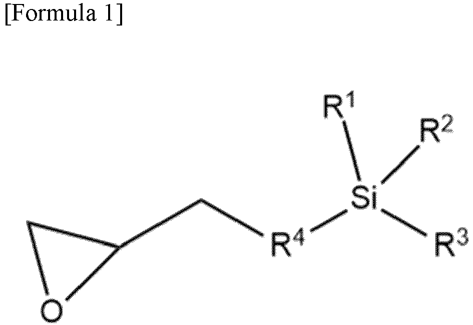

In Formula 1, R¹ to R³ may each independently be an organic group having 1 to 10 carbon atoms, or an organic group having 1 to 8 carbon atoms, or an organic group having 1 to 5 carbon atoms or an organic group having 1 to 3 carbon atoms.

For example, R¹ to R³ may each independently be an alkyl group or an alkoxy group having 1 to 10 carbon atoms; an alkyl group or an alkoxy group having 1 to 8 carbon atoms; or an alkyl group or an alkoxy group having 1 to 5 carbon atoms; or an alkyl group or an alkoxy group having 1 to 3 carbon atoms.

In Formula 1, R⁴ may be an organic group having 1 to 10 carbon atoms, or an organic group having 1 to 8 carbon atoms, or an organic group having 1 to 5 carbon atoms.

For example, R⁴ may be an alkylene group having 1 to 10 carbon atoms, or an alkylene group having 1 to 8 carbon atoms, or an alkylene group having 1 to 5 carbon atoms, which includes at least one heteroatom.

In exemplary embodiments, the silane compound having a glycidyl group may include 3-(glycidyloxypropyl)trimethoxysilane. The 3-(glycidyloxypropyl)trimethoxysilane may be represented by Formula 1-1 below.

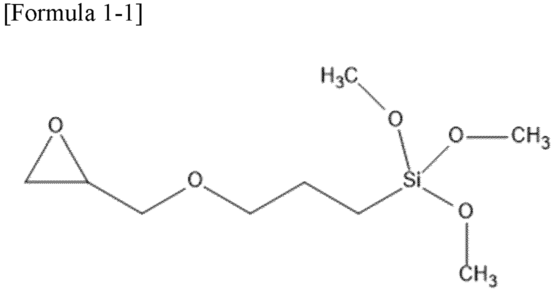

In exemplary embodiments, the silane compound having an isocyanate group may include a silane compound represented by Formula 2 below.

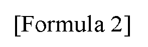

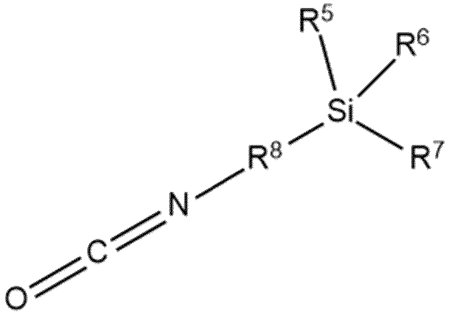

In Formula 2, R⁵ to R⁷ may each independently be an organic group having 1 to 10 carbon atoms, or an organic group having 1 to 8 carbon atoms, or an organic group having 1 to 5 carbon atoms, or an organic group having 1 to 3 carbon atoms.

For example, R⁵ to R⁷ may each independently be an alkyl group or an alkoxy group having 1 to 10 carbon atoms; an alkyl group or an alkoxy group having 1 to 8 carbon atoms; or an alkyl group or an alkoxy group having 1 to 5 carbon atoms; or an alkyl group or an alkoxy group having 1 to 3 carbon atoms.

In Formula 2, R⁸ may be an alkylene group having 1 to 10 carbon atoms, or an alkylene group having 1 to 8 carbon atoms, or an alkylene group having 1 to 5 carbon atoms, or an alkylene group having 1 to 3 carbon atoms.

In exemplary embodiments, the silane compound having an isocyanate group may include 3-isocyanatopropyltrimethoxysilane. The 3-isocyanatopropyltrimethoxysilane may be represented by Formula 2-1 below.

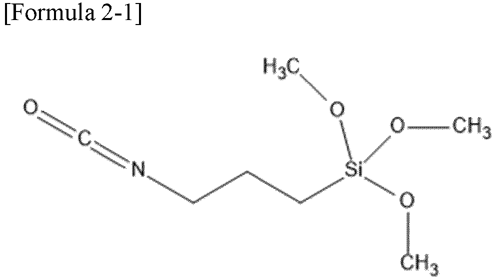

In exemplary embodiments, the refrigeration oil composition may further include a stabilizer. For example, the stabilizer may include a thiazole-based compound, a triazole-based compound, a thiadiazole-based compound, etc. For example, the stabilizer may include a phosphate-based compound. For example, the phosphate-based compound may include trimethylphosphate, triethylphosphate, tributylphosphate, tris(methylphenyl)phosphate, triphenylphosphate, etc. Accordingly, by preventing the decomposition of the refrigerant composition and the refrigeration oil composition, as well as oxidation of the refrigeration oil composition, etc., the chemical stability of the refrigeration oil composition at high temperatures and/or high pressures may be further enhanced.

The refrigeration oil composition may further include an amine-based phosphate compound, particularly an amine-based phosphate compound having 10 or more carbon atoms. Accordingly, the chemical stability of the refrigeration oil composition at high temperatures and/or high pressures may be further enhanced.

The stabilizer may be included in an amount of 0.5 wt% to 3 wt%, 0.5 wt% to 2 wt%, or 1 wt% to 2 wt% based on the total weight of the refrigeration oil composition. When the refrigeration oil composition includes the stabilizer in an amount of 3 wt% or less, the initial total acid number (TAN) of the refrigeration oil composition may be prevented from becoming excessively high, thereby further enhancing the chemical stability of the refrigeration oil composition.

In exemplary embodiments, the refrigeration oil composition may further include a lubricant. For example, the lubricant may include paraffin, naphthene, aromatic hydrocarbon, benzene or naphthalene, substituted or unsubstituted with linear or branched alkyl groups, polyester, polyol ester, polyvinyl ether, and the other component for lubricant. For example, the lubricant may include an alkylated naphthalene. The alkylated naphthalene may be monoalkyl naphthalene, dialkyl naphthalene, trialkyl naphthalene, tetraalkyl naphthalene, or a mixture thereof.

For example, the lubricant may include a polyol ester.

The lubricant may be included in an amount of 70 wt% to 99 wt%, 80 wt% to 98.5 wt%, 90 wt% to 98 wt%, or 91 wt% to 97.5 wt% based on the total weight of the refrigeration oil composition.

The refrigeration oil composition according to exemplary embodiments may further include an antioxidant, a defoaming agent, a load-bearing additive, a chlorine scavenger, a detergent-dispersant, a viscosity index improver, an oiliness agent, a rust inhibitor, a pour point depressant, an extreme pressure additive, and the other additives for the refrigeration oil composition.

For example, the antioxidant may be a phenolic or amine-based antioxidant. The phenolic antioxidant may include 2,6-di-tert-butyl-4-methylphenol (DBPC), 2,6-di-tert-butyl-4-ethylphenol, 2,2'-methylenebis(4-methyl-6-tert-butylphenol), 2,4-dimethyl-6-tert-butylphenol, 2,6-di-tert-butylphenol, etc. The amine-based antioxidant may include N,N'-diisopropyl-p-phenylenediamine, N,N'-di-sec-butyl-p-phenylenediamine, phenyl-α-naphthylamine, N,N'-diphenyl-p-phenylenediamine, etc.

For example, the defoaming agent may be a homopolymer or copolymer of acrylic ester.

For example, the extreme pressure additive may include an extreme pressure additive of an organosulfur compound, a phosphorothioate ester-based extreme pressure additive, an ester-based extreme pressure additive, an organochlorine-based extreme pressure additive, an organofluorine-based extreme pressure additive, an alcohol-based extreme pressure additive, an extreme pressure additive of a metal compound, etc. The extreme pressure additive of an organosulfur compound may include monosulfides, polysulfides, sulfoxides, sulfones, thiosulfinates, sulfurized oils, thiocarbonates, thiophenes, thiazoles, methanesulfonates, etc. The ester-based extreme pressure additive may include higher fatty acids, hydroxyaryl fatty acids, polyol esters, acrylates, etc. The organochlorine-based extreme pressure additive may include chlorinated hydrocarbons or chlorinated carboxylic acid derivatives, etc. The organic fluorine-based extreme pressure additive may include fluorinated aliphatic carboxylic acids, fluoroethylene resins, fluoroalkyl polysiloxanes, fluorinated graphite, etc. The extreme pressure additive of a metal compound may include naphthenates (such as lead naphthenic acid), fatty acid salts (such as lead fatty acid salts), thiophosphates (such as zinc dialkyldithiophosphate), thiocarbamates, organic molybdenum compounds, organic tin compounds, organic germanium compounds, etc.

FIGS. 1 and 2 are schematic views illustrating the flow of a refrigerant for heat exchange in a cooling mode or a heating mode of a heat exchanger according to one embodiment, respectively.

In FIGS. 1 and 2, the directions of the arrows indicate the flow path of the refrigerant composition.

Referring to FIG. 1, in the cooling mode, the refrigerant composition is compressed through a compressor, bypasses an internal condenser and an expansion valve (heating) in turn, releases heat in an external condenser, then expands through the expansion valve (cooling), and reabsorbs heat through an evaporator.

Referring to FIG. 2, in the heating mode, the refrigerant composition is compressed through the compressor, releases heat in the internal condenser, expands through the expansion valve (heating), absorbs heat from the external condenser, and then further absorbs heat through a cooler.

The heat pump according to exemplary embodiments of the present disclosure includes a refrigerant composition including trifluoroiodomethane (R-13I1) and the refrigeration oil composition. Accordingly, the heat pump may improve refrigeration performance while enhancing environmental friendliness and stability.

The heat pump may include a compressor, a condenser, an expansion valve and an evaporator. In the compressor, the above-described refrigerant may be compressed to a high temperature and high pressure state, and in the expansion valve in the expansion device, the above-described refrigerant may be expanded to a low temperature and low pressure state.

For example, the above-described refrigerant may release heat or absorb heat while circulating through the compressor, condenser, expansion valve and evaporator inside the heat pump. The refrigerant may be maintained in a gaseous state at high temperature and high pressure in the compressor. The refrigerant may be liquefied into a liquid state by releasing heat in the condenser. The refrigerant may be maintained in a low temperature and low pressure liquid state, or in a mixed state of liquid and gas in the expansion valve. The refrigerant may absorb heat in the evaporator and vaporize into a gaseous state.

In some embodiments, a coefficient of performance (COP) of the heat pump may be 1 to 10. The coefficient of performance (COP) refers to the ratio of the amount of heat effectively gained to the amount of work input when operating the heat pump.

A highly efficient heat pump having the coefficient of performance within the above range may be provided using the above-described refrigerant.

According to exemplary embodiments, the refrigerant including trifluoroiodomethane (R-13I1) may further include natural refrigerants, hydrofluorocarbon (HFC)-based refrigerants, hydrofluoroolefin (HFO)-based refrigerants, hydrochlorofluorocarbon (HCFC)-based refrigerants, etc.

The natural refrigerants may include methane (R-50), ammonia (R-717), carbon dioxide (R-744), ethane (R-170), propane (R-290), propylene (R-1270), isobutane (R-600a), dimethyl ether, isopentane, pentane, etc.

The hydrofluorocarbon (HFC) refrigerants may include difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethyl methyl ether (RE143a), trifluoromethane (R-23), fluoroethane (R-161), octafluoropropane (R-218), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), octafluorocyclobutane (RC318), 1,1,1,3,3-pentafluorobutane (R-365mfc), etc.

The hydrofluoroolefin (HFO) refrigerants may include 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), 1,2,3,3,3-pentafluoropropene (R-1225ye), etc.

The hydrochlorofluorocarbon (HCFC) refrigerants may include difluorochloromethane (R-22), chlorotetrafluoroethane (R-124), 1-chloro-1,1-difluoroethane (R-142b), etc.

### Examples and Comparative Examples

Refrigeration oil compositions of examples and comparative examples were prepared according to the compositions described in Table 1 below. POE and/or alkylated naphthalene may be used as a lubricant in the examples and the comparative examples.

**[TABLE 1]**

| Classification | POE (wt%) | Alkylated naphthalene (wt%) | Silane compounds or alternative as acid scavenger | | Stabilizer (wt%) |
|---|---|---|---|---|---|
| | | | Component | Content (wt%) | |
| Example 1 | 95 | 2 | A1 | 1.5 | 1.5 |
| Example 2 | 91.5 | 2 | A1 | 5 | 1.5 |
| Example 3 | 89.5 | 2 | A1 | 7 | 1.5 |
| Example 4 | 95 | 2 | A2 | 1.5 | 1.5 |
| Example 5 | 91.5 | 2 | A2 | 5 | 1.5 |
| Example 6 | 89.5 | 2 | A2 | 7 | 1.5 |
| Comparative Example 1 | 100 | - | - | - | - |
| Comparative Example 2 | 95 | 2 | B | 1.5 | 1.5 |
| Comparative Example 3 | 93.5 | 2 | B | 3 | 1.5 |

| | | | | | |
|---|---|---|---|---|---|
| * POE: Polyolester oil (Synastive ES 4068, BASF) * Alkylated naphthalene (Synesstic 5, Exxon mobil) * Stabilizer: Phosphate: tris(methylphenyl) phosphate (RC 3661, Lanxess) * A1: Silane compound represented by Formula 1-1 * A2: Silane compound represented by Formula 2-1 * B (alternative acid scavenger): 2-Ethylhexyl glycidyl ether (CAS 2461-15-6) | | | | | |

### Experimental Example: ASHRAE 97 evaluation

The refrigeration oil composition, CF₃I, copper (Cu), aluminum (Al) and iron (Fe) catalysts of the examples were introduced into a sealed tube, and exposed to an environment of 175 °C for 14 days, and then subjected to the following evaluation according to ASHRAE 97.

In the case of Comparative Example 1, the following evaluation was performed under the same conditions as the above examples, except that the components were exposed to an environment of 150 °C.

In the case of Comparative Examples 2 and 3, the following evaluation was performed under the same conditions as the above examples, except that the components were exposed to an environment of 160 °C.

### 1) Measurement of total acid number (TAN)

TAN was measured in accordance with the ASTM D664 method using a 686 Titroprocessor (Metrohm) to determine the acid number in the refrigeration oil composition. The ASTM D664 provides a standard test method the amount of acidic substance in the oil, which is a measure of lubricant degradation by acidic constituent.

### 2) Measurement of ASTM color

The color was measured in accordance with the ASTM D1500 method using a LICO 500 spectral colorimeter (HACH LANGE), which may serve as an indication of the degree of contamination.

FIGS. 3 to 8 are photographs showing the refrigeration oil compositions of Examples 1, 2 and 4, and Comparative Examples 1 to 3, respectively, after ASHRAE 97 evaluation was performed in the experimental example.

The evaluation results of the experimental examples for the refrigeration oil compositions of Examples 1 to 6 and Comparative Examples 1 to 3 are shown in Table 2 below.

**[TABLE 2]**

| Refrigerant oil | ASHRAE 97 (after 14 days of exposure) | | |
|---|---|---|---|
| | Temperature (°C) | TAN after evaluation | ASTM color |
| Example 1 | 175 | 0.47 | < 0.5 |
| Example 2 | 175 | 0.48 | < 0.5 |
| Example 3 | 175 | 0.51 (Metal discoloration & Precipitate formation) | 1 |
| Example 4 | 175 | 0.85 | 1 |
| Example 5 | 175 | 0.96 | 1.5 |
| Example 6 | 175 | 1.21 (Metal discoloration) | 2 |
| Comparative Example 1 | 150 | > 15 | >8 |
| Comparative Example 2 | 160 | 8.2 (Precipitate formation) | 7 |
| Comparative Example 3 | 160 | 5.38 (Metal discoloration) | 6 |

Referring to FIGS. 3 to 8, the refrigeration oil compositions of Examples 1, 2, and 4 showed less color change even under a higher temperature (175 °C) environment, and thus exhibited better chemical stability at high temperatures than the refrigeration oil compositions of the comparative examples.

Referring to Table 2, the refrigeration oil compositions of the examples exposed to a higher temperature (175 °C) had TAN values of 1.3 or lower, while the refrigeration oil compositions of the comparative examples exposed to a lower temperature (150 °C) had TAN values of 5 or higher, indicating that the refrigeration oil compositions of the examples containing silane compounds exhibited better acid scavenging capabilities.

The refrigeration oil compositions of the examples had ASTM color values of 2 or lower, while the refrigeration oil compositions of the comparative examples had ASTM color values of 6 or higher.

Accordingly, the refrigeration oil composition of the examples using silane compounds as acid scavengers exhibited better chemical stability at high temperatures.

## Claims

1. A refrigeration oil composition comprising:
a silane compound having at least one of a glycidyl group and an isocyanate group.

2. The refrigeration oil composition according to claim 1, wherein the silane compound having a glycidyl group comprises a silane compound represented by Formula 1 below: 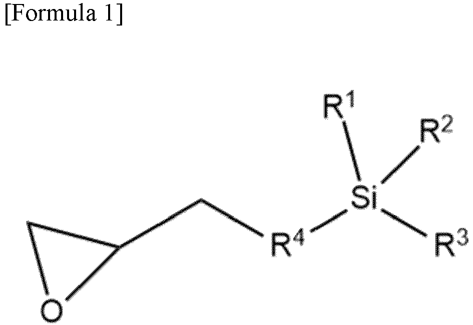 (in Formula 1, R¹ to R³ are each independently an organic group having 1 to 10 carbon atoms, and R⁴ is an organic group having 1 to 10 carbon atoms).

3. The refrigeration oil composition according to claim 2, wherein R¹ to R³ are each independently an alkyl group or an alkoxy group having 1 to 10 carbon atoms,
and/or wherein R⁴ includes at least one heteroatom.

4. The refrigeration oil composition according to any one of claims 1 to 3, wherein the silane compound having an isocyanate group comprises a silane compound represented by Formula 2 below: 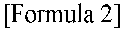 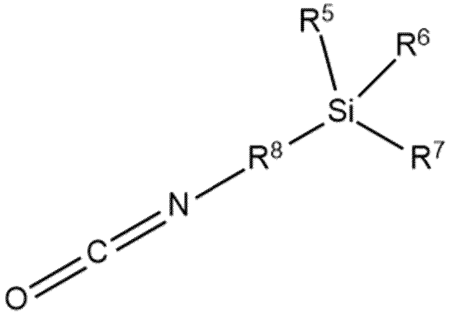 (in Formula 2, R⁵ to R⁷ are each independently an organic group having 1 to 10 carbon atoms, and R⁸ is an alkylene group having 1 to 10 carbon atoms).

5. The refrigeration oil composition according to claim 4, wherein R⁵ to R⁷ are each independently an alkyl group or an alkoxy group having 1 to 10 carbon atoms.

6. The refrigeration oil composition according to any one of claims 1 to 5, wherein the silane compound is included in an amount of 5% or less by weight of the refrigeration oil composition.

7. The refrigeration oil composition according to any one of claims 1 to 6, further comprising a stabilizer,
preferably wherein the stabilizer is included in an amount of 0.5 to 3 % by weight of the refrigeration oil composition.

8. The refrigeration oil composition according to claim 7, wherein the stabilizer comprises a phosphate compound,
preferably wherein the phosphate compound comprises at least one of trimethylphosphate, triethylphosphate, tributylphosphate, tris(methylphenyl)phosphate, and triphenylphosphate.

9. The refrigeration oil according to any one of claims 1 to 8, further comprising a lubricant,
preferably wherein the lubricant is included in an amount of 70 to 99 % by weight of the refrigeration oil composition, and/or preferably wherein the lubricant comprises a polyol ester and/or alkylated naphthalene.

10. The refrigeration oil composition according to any one of claims 1 to 9,
further comprising at least one substance selected from the group consisting of an antioxidant, a defoaming agent, a load-bearing additive, a chlorine scavenger, a detergent-dispersant, a viscosity index improver, an oiliness agent, a rust inhibitor, a pour point depressant, and an extreme pressure additive.

11. A refrigerant composition comprising trifluoroiodomethane (R-13I1) and the refrigeration oil composition according to any one of claims 1 to 10.

12. A heat pump operated with the refrigerant composition of claim 11.

13. A method for cooling by the heat pump of claim 12 comprising:
the refrigerant composition of claim 11 is compressed through a compressor;
is bypassed to an internal condenser and an expansion valve for heating;
releases heat in an external condenser;
expands through an expansion valve for cooling; and
reabsorbs heat through an evaporator.

14. A method for heating by the heat pump of claim 12 comprising:
the refrigerant composition of claim 11 is compressed through the compressor;
releases heat in an internal condenser;
expands through an expansion valve for heating;
absorbs heat from an external condenser; and
absorbs heat through a cooler.

15. Use of the refrigeration oil composition according to any one of claims 1 to 10 for removing acid and/or water formed in the refrigerant composition of claim 11, for improving chemical stability in the high temperature and/or high pressure, and/or for preventing iodine contained in R-13I1 from attaching to metal surfaces.
